# EUROPEAN PATENT APPLICATION

(11) **EP 1 674 350 A2**
(43) Date of publication of application: **28.06.2006**
(21) Application number: 05026858.0
(22) Date of filing: 08.12.2005
(51) Int. Cl.: B60R 21/16

(54) **Airbag packet, production method therefor and airbag device**

(30) Priority: 24.12.2004 JP 2004373958
(71) Applicant: TAKATA CORPORATION, Minato-ku, Tokyo 106-8510 (JP)
(72) Inventor: Nakamura, Kenji, Takata Corporation, Tokyo 106-8510 (JP); Teramoto, Hiroshi, Takata Corporation, Tokyo 106-8510 (JP)
(74) Representative: Vossius & Partner

(57) **Abstract**

To provide a method for shaping an airbag into a predetermined packet by simply compressing the airbag without regularly folding the airbag. A curtain airbag 1 is placed in a case 10 so that an upper side thereof is disposed near a bottom face 17 and a lower side thereof is disposed near an opening 16. The curtain airbag 1 is inflated by the supply of air. The curtain airbag 1 is compressed from a side of the opening 16 toward the bottom face 17 by a contact member 30. In this case, air is discharged from the curtain airbag 1 through an aperture 6 for an inflator. After the curtain airbag 1 is compressed into a predetermined small packet, an airbag packet 1' is drawn out of the case 10 while sliding along the bottom face 17. After the airbag packet 1' is drawn out of the case 10, the shape of the airbag packet 1' is retained by a shape-retaining member.

## Description

The present invention relates to a method for shaping an airbag, which protects a passenger in an automobile or the like, into a packet, and more particularly, to an alternative method for folding an airbag. The present invention also relates to an airbag packet formed by the method, and an airbag device including the airbag packet.

Automobiles include various airbag devices such as a driver airbag device, a passenger airbag device, a side airbag device, and a head-protection curtain airbag device.

In a conventional airbag device, an airbag is regularly folded manually or mechanically. For example, JP-A-2003-260998 (Patent Document 1) discloses a device that spreads a curtain airbag and sequentially folds the airbag into a long folded form.

When the airbag is regularly folded, as described above, much labor is required, and a folding structure is complicated.

It is an object of the present invention to provide a method for simply compressing an airbag into a predetermined packet without regularly folding the airbag, an airbag packet formed by the method, and an airbag device including the airbag packet.

In an airbag-packet production method claimed in claim 1, an airbag is placed in a folding case that includes a bottom face, an opening that is provided opposite the bottom face, and a surrounding wall that extends from the periphery of the bottom face toward the opening, and the airbag is compressed toward the bottom face by a contact member so as to be shaped into an airbag packet. The airbag bulges with air when being placed in the case. Air is discharged from the airbag when the airbag is compressed by the contact member.

The airbag-packet production method claimed in claim 2, according to claim 1, the airbag has an aperture for an inflator, is placed in the case so that the aperture is disposed near the bottom face of the case, and is inflated by air supplied through the aperture.

In the airbag-packet production method claimed in claim 3, according to claim 1 or 2, an airbag-packet drawing opening is provided on a side of the surrounding wall near the bottom face, and the airbag packet is drawn out of the case through the airbag-packet drawing opening.

In the airbag-packet production method claimed in claim 4, according to any one of claims 1 to 3, the shape of the airbag packet is retained by a shape-retaining member after the airbag packet is taken out of the case.

In the airbag-packet production method claimed in claim 5, according to any one of claims 1 to 4, the airbag is a curtain airbag that is mounted at an upper side thereof on an upper part of a side face of a cabin so as to deploy downward, and is placed in the case so that the upper side is disposed near the bottom face of the case and a lower side thereof is disposed near the opening of the case.

An airbag packet claimed in claim 6 is produced by the above method of the present invention.

An airbag device claimed in claim 7 includes the airbag packet, and an inflator that is configured to inflate the airbag packet.

In the airbag-packet production method of the present invention, an airbag is compressed into a packet. Less labor is required and the structure is extremely simpler, than in the related art in which the airbag is regularly folded.

Before compression, the airbag bulges with air, and is spread along the inner face of the case. For this reason, the airbag can be compressed uniformly.

An airbag packet produced by the method smoothly deploys in a direction opposite the compressing direction. Therefore, in an airbag device including the airbag packet, it is possible to inflate and deploy the airbag smoothly.

In the airbag-packet production method claimed in claim 2, the airbag, wchich is not filled with air, is placed in the case, and is then inflated by supplied air. Therefore, the airbag is easily placed in the case. As the airbag is inflated from the side of the bottom face of the case toward the opening, an inflating condition can be observed.

According to the method claimed in claim 3, the compressed airbag can be easily taken out by being slid and drawn sideward along the bottom face of the case.

According to the method claimed in claim 4, since the packet shape of the compressed airbag is retained, the airbag can be easily assembled into the airbag device.

Preferably, the shape-retaining member is broken or cut when the airbag is inflated and deployed.

As claimed in claim 5, the present invention is suited to shape the curtain airbag into a packet. The airbag packet is formed by supplying the curtain airbag with air and then compressing the curtain airbag toward the upper side thereof. The airbag packet is inflated and deployed in a direction opposite to the compressing direction. Accordingly, extremely smooth inflation and deployment are performed.

An embodiment of the present invention will be described below with reference to the drawings.

Fig. 1 is an exploded perspective view of an airbag-folding case and a contact member used in an airbag-packet production method according to an embodiment of the present invention;
Fig. 2 is a horizontal sectional view that shows the interior of the case, and
Figs. 3(a) to 3(c) are explanatory views that show an airbag folding procedure. Figs. 3(a) to 3(c) show the cross section of the case, taken along line III-III in Fig. 2.

In this embodiment of the present invention, a case 10 is used to fold a curtain airbag 1 that is mounted at its upper side on an upper part of a side face of a cabin and that deploys downward.

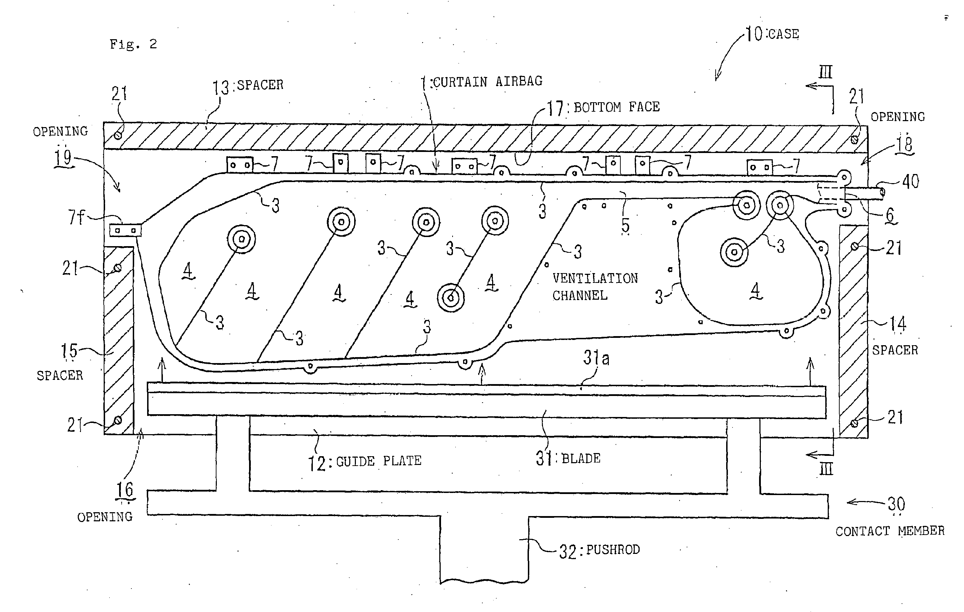

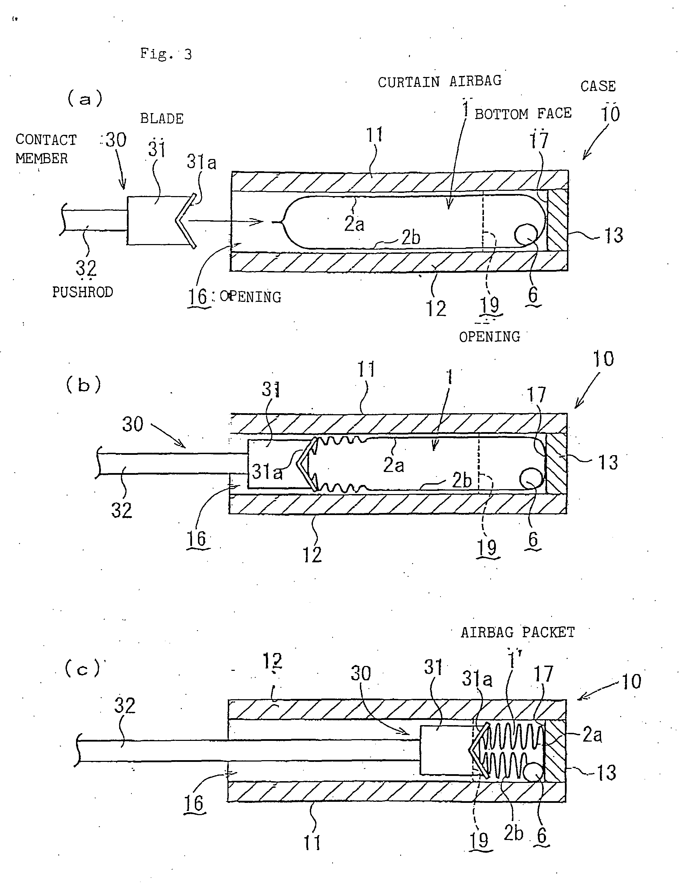

The curtain airbag 1 is formed by sewing two base cloths 2a and 2b (Fig. 3), which are placed one on the other, by a seam 3 (Fig. 2) made of, for example, thread. The base cloths 2a and 2b may be provided separately, or may be continuous (for example, folded in two or shaped like a cylinder).

In this embodiment of the present invention, a plurality of chambers 4 are formed between the base cloths 2a and 2b by the seam 3. A ventilation channel 5 for connecting the chambers 4 is provided along an upper side of the curtain airbag 1 (an upper side of the curtain airbag 1 installed in a vehicle. Hereinafter, the up-down direction and front-rear direction of the curtain airbag 1 refer to the directions when the curtain airbag 1 is installed). A rear end of the ventilation channel 5 serves as an aperture 6 for an inflator (not shown). Gas is supplied from the aperture 6 to the chambers 4 through the ventilation channel 5. The inflator aperture 6 is disposed at an upper rear end of the curtain airbag 1, and is opened toward the rear of the bag.

Projections 7 project from the upper side of the curtain airbag 1 so that the curtain airbag 1 is fastened to a roof side rail (not shown) of the vehicle therewith. A projection 7f projects from a front end of the curtain airbag 1 so that the curtain airbag 1 is fastened to an A-pillar (not shown) therewith.

In this embodiment of the present invention, the case 10 includes a pair of guide plates 11 and 12 respectively opposing the base cloths 2a and 2b of the curtain airbag 1 placed inside the case 10, and spacers 13, 14, and 15 interposed between the guide plates 11 and 12 and having a predetermined thickness.

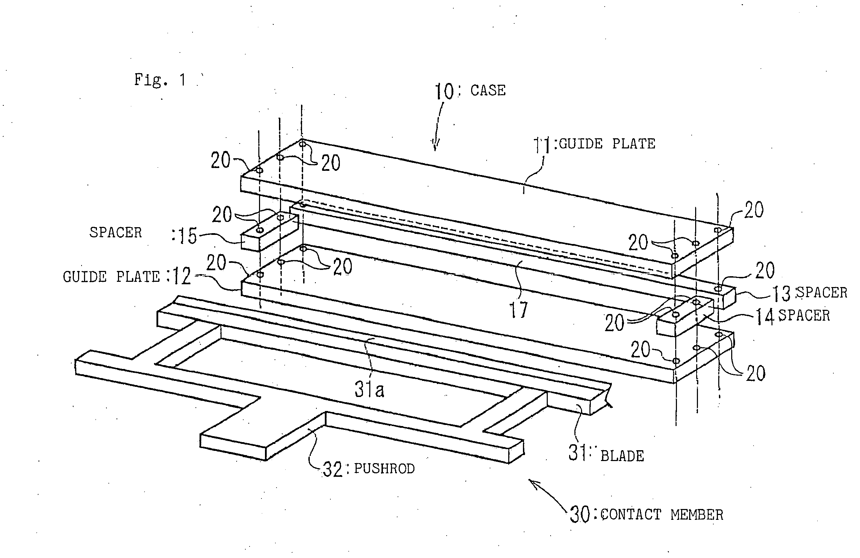

As shown in Figs. 1 and 2, the guide plates 11 and 12 are rectangular in plan view, and oppose with the spacers 13 to 15 disposed therebetween so that surfaces thereof are parallel to each other. The spacer 13 extends along one-end long sides of the guide plates 11 and 12, and the spacers 14 and 15 extend along both short sides of the guide plates 11 and 12. The distance between the spacers 14 and 15 is slightly larger than the front-rear width of the curtain airbag 1. The spacers 14 and 15 extend parallel to each other, and the spacer 13 extends in a direction orthogonal to the spacers 14 and 15.

An opening 16 is provided between the other-end long sides of the guide plates 11 and 12.

The thickness of the spacers 13 to 15 (distance between the guide plates 11 and 12) is determined so that the base cloths 2a and 2b can lightly touch the guide plates 11 and 12 when the curtain airbag 1 is inflated at a predetermined pressure by the supply of air.

In this embodiment, the spacer 13 defines a bottom face 17 of the case 10, and the guide plates 11 and 12 and the spacers 14 and 15 define a surrounding wall (not denoted by any reference numeral) of the case 10. The bottom face 17 is a part of the spacer 13 facing the interior of the case 10.

In this embodiment of the present invention, spaces (openings 18 and 19) are provided between ends of the spacers 14 and 15 near the bottom face 17, and the bottom face 17. The bottom face 17 communicates with both sides of the case 10 via the openings 18 and 19. The opening 18 at the spacer 14 is provided so that air is supplied into the curtain airbag 1 placed inside the case 10 therethrough, and the opening 19 at the spacer 15 is provided so that an airbag packet 1' (Fig. 3(c)) is taken out of the case 10 therethrough. Positions of the air supply opening 18 and the airbag-packet drawing opening 19 may be changed with each other.

A plurality of insertion holes 20, in which fasteners, such as bolts, extend, are provided at overlapping portions between the guide plates 11 and 12 and the spacers 13 to 15. Fasteners 21 such as bolts (Fig. 2) are fastened through the insertion holes 20, thereby combining the guide plates 11 and 12 and the spacers 13 to 15.

The materials of the guide plates 11 and 12 and the spacers 13 to 15 are not particularly limited. For example, the guide plates 11 and 12 is made of an acrylic plate on which a below-described contact member 30 can slide well. The spacers 13 to 15 are made of, for example, wood that is easy to work and is inexpensive.

The contact member 30 for compressing the curtain airbag 1 placed inside the case 10 includes a blade 31 that enters the case 10 so as to be in contact with the curtain airbag 1, and a pushrod 32 for pressing the blade 31.

The blade 31 extends in the width direction of the case 10, and has a length such as to be in contact with the entire curtain airbag 1 from one end to the other end in the width direction. In this embodiment of the present invention, a front end face of the blade 31 (a face in contact with the curtain airbag 1) is caved in so that the adjacency of the vertical center is deepest, as shown in Fig. 3.

The thickness of the blade 31 is smaller than the thickness of the spacers 13 to 15. A flexible sheet 31a is provided on the front end face of the blade 31, and upper and lower edges of the flexible sheet 31a slightly protrude from upper and lower edges of the front end face. When the blade 31 is inserted in the case 10, the upper and lower edges of the flexible sheet 31a slide in slight contact with the surfaces of the guide plates 11 and 12. While the material of the flexible sheet 31a may be, for example, soft synthetic resin or rubber, it is not limited thereto.

In this embodiment, the pushrod 32 is bifurcated into two parts, and the parts are connected to one and the other halves of the blade 31 in the longitudinal direction. For this reason, a pressing force from the pushrod 32 is substantially uniformly applied to the blade 31 in the longitudinal direction thereof.

while a driving power source for the pushrod 32 is not particularly limited, it may be, for example, a hydraulic or air cylinder mechanism, a rack-and-pinion mechanism using a motor, or manual pressing.

A procedure for forming a packet of the curtain airbag 1 by using the case 10 and the contact member 30 will be described below.

First, the curtain airbag 1 is placed in the case 10 so that its upper side is disposed near the bottom face 17 and its lower side is disposed near the opening 16, as shown in Fig. 2. In this case, the inflator aperture 6 at the upper rear end of the curtain airbag 1 faces the air-supply opening 18 of the case 10, and the front projection 7f faces the airbag-packet drawing opening 19.

Subsequently, an air supply tube 40 of a pump (not shown) is inserted in the inflator aperture 6 through the opening 18, and air is fed into the curtain airbag 1 by the pump to inflate the curtain airbag 1.

Next, the blade 31 of the contact member 30 is pushed into the case 10 through the opening 16, and compresses the inflated curtain airbag 1 toward the bottom face 17. In this case, air in the curtain airbag 1 is discharged through the inflator aperture 6.

In this case, as the curtain airbag 1 is compressed by the blade 31, air in the curtain airbag 1 may be naturally exhausted through the aperture 6, or may be forcibly exhausted from the curtain airbag 1 by using the above-described pump.

After the curtain airbag 1 is compressed into a predetermined small packet by the blade 31, the projection 7f is pulled through the opening 19, and the airbag packet 1' is drawn out of the case 10 while sliding along the bottom face 17. Before the airbag packet 1' is drawn out of the case 10, air remaining in the airbag packet 1' may be discharged by the pump, as necessary. This makes the airbag packet 1' tight, and prevents the airbag packet 1' from losing its shape.

After the airbag packet 1' is drawn out of the case 10, the shape thereof is retained by a shape-retaining member (not shown) such as a tape or a bag. The shape-retaining member is configured to be broken or cut to remove restraint when the curtain airbag 1 is inflated and deployed.

Subsequently, the curtain airbag packet 1' is placed from an A-pillar of a vehicle along the roof side rail, the projections 7f and 7 are fastened to the A-pillar and the roof side rail by fasteners such as bolts or rivets, and the inflator is connected to the inflator aperture 6. Thus, the curtain airbag device is constructed.

In the method for producing the curtain airbag packet, the curtain airbag 1 is compressed into a packet by the contact member 30. Therefore, less labor is required and the structure is extremely simpler, than in a case in which the curtain airbag is regularly folded.

In this method, the curtain airbag 1 bulges with air before compression, and is spread along the inner faces (guide plates 11 and 12) of the case 10. Therefore, the curtain airbag 1 can be compressed uniformly.

When the bulging curtain airbag 1 is thus compressed while discharging air therefrom through the aperture 6, it can be shaped into a small packet while ensuring an air passage from the aperture 6 to the chambers 4. As a result, when gas is supplied from the inflator to the curtain airbag 1, the gas smoothly flows from the aperture 6 into the chambers 4. This increases the speed of inflation and deployment of the curtain airbag 1.

In particular, in this embodiment of the present invention, since the curtain airbag 1 is compressed toward its upper side to be shaped into an airbag packet, it is inflated and deployed in a direction opposite the compressing direction. Consequently, it is possible to inflate and deploy the curtain airbag 1 extremely smoothly.

The above embodiment is exemplary, and the present invention is not limited to the embodiment.

The present invention is also applicable to cases in which variable airbags in airbag devices other than the curtain airbag are shaped into a packet.

## Claims

1. An airbag-packet production method wherein an airbag is placed in a folding case that includes a bottom face, an opening that is provided opposite the bottom face, and a surrounding wall that extends from the periphery of the bottom face toward the opening, and the airbag is compressed toward the bottom face by a contact member so as to be shaped into an airbag packet, wherein the airbag bulges with air when being placed in the case, and wherein air is discharged from the airbag when the airbag is compressed by the contact member.

2. The airbag-packet production method according to claim 1, wherein the airbag has an aperture for an inflator, is placed in the case so that the aperture is disposed near the bottom face of the case, and is inflated by air supplied through the aperture.

3. The airbag-packet production method according to claim 1 or 2, wherein an airbag-packet drawing opening is provided on a side of the surrounding wall near the bottom face, and the airbag packet is drawn out of the case through the airbag-packet drawing opening.

4. The airbag-packet production method according to any one of claims 1 to 3, wherein the shape of the airbag packet is retained by a shape-retaining member after the airbag packet is taken out of the case.

5. The airbag-packet production method according to any one of claims 1 to 4, wherein the airbag is a curtain airbag that is mounted at an upper side thereof on an upper part of a side face of a cabin so as to deploy downward, and is placed in the case so that the upper side is disposed near the bottom face of the case and a lower side thereof is disposed near the opening of the case.

6. An airbag packet produced by the method according to any one of claims 1 to 5.

7. An airbag device comprising the airbag packet according to claim 6, and an inflator that is configured to inflate the airbag packet.
